(19) Europäisches Patentamt / European Patent Office / Office européen des brevets

(11) **EP 4 043 866 A1**

(12) **EUROPÄISCHE PATENTANMELDUNG**

(43) Veröffentlichungstag:
**17.08.2022  Patentblatt 2022/33**

(21) Anmeldenummer: **21213430.8**

(22) Anmeldetag: **20.12.2012**

(51) Internationale Patentklassifikation (IPC):
**G01N 21/55** *(2014.01)*        **G01N 21/552** *(2014.01)*
**G01N 21/27** *(2006.01)*

(52) Gemeinsame Patentklassifikation (CPC):
**G01N 21/552;** G01N 21/274

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2011  AT 18842011**

(62) Dokumentnummer(n) der früheren Anmeldung(en) nach Art. 76 EPÜ:
**12455011.2 / 2 607 887**

(71) Anmelder: **Anton Paar GmbH**
**8054 Graz-Straßgang (AT)**

(72) Erfinder:
• **Imre, Michael**
**8042 Graz (AT)**

• **Loder, Johann**
**8160 Weiz (AT)**
• **Pfeifer, Gerhard**
**8101 Gratkorn (AT)**

(74) Vertreter: **Wildhack & Jellinek**
**Patentanwälte OG**
**Landstraßer Hauptstraße 50**
**1030 Wien (AT)**

Bemerkungen:
Diese Anmeldung ist am 09-12-2021 als Teilanmeldung zu der unter INID-Code 62 erwähnten Anmeldung eingereicht worden.

(54) **VERFAHREN UND SENSOR ZUR MESSUNG DES KOHLENDIOXID-GEHALTES VON FLUIDEN**

(57)      Die Erfindung betrifft ein Verfahren sowie einen ATR-Sensor zur Messung des $CO_2$-Gehaltes von Fluiden mit einem ATR-Sensor, der in einem Gehäuse (6) als Sensorkomponenten eine elektromagnetische Strahlungsquelle (2) zur Abgabe eines vorgegebenen Wellenlängenbereiches, einen für die Strahlung durchlässigen und mit dem zu untersuchenden Fluid (5) in Kontakt bringbaren Reflexionskörper (1) und einen Detektor (3) für die reflektierte Strahlung und weitere zur Durchführung der Messung und zum Betrieb dienende Bauteile (16, 17, 18) aufweist.

Erfindungsgemäß ist vorgesehen, dass vor dem gasdichten Verschließen des Gehäuses (6), insbesondere zur Vermeidung einer Messwertdrift und zum Freihalten der Strahlungswege von $CO_2$, in das Gehäuse (6) und/oder in einen mit dem Innenraum (7) des Gehäuses (6) verbindbaren oder verbundenen Aufnahmeraum (7a) eines Zusatzgehäuses (6a) vor dem gasdichten Verschließen des Innenraumes (7) und/oder des Aufnahmeraumes (7a) $CO_2$-Gettermaterial (8) eingebracht wird (Fig. 2).

Fig. 2

EP 4 043 866 A1

**Beschreibung**

Die Erfindung betrifft ein Verfahren gemäß dem Oberbegriff des Patentanspruches 1 sowie einen ATR-Sensor gemäß dem Oberbegriff des Patentanspruches 3.

Die Erfindung dient zur Messung des $CO_2$-Gehaltes von Fluiden, wobei die Fluide auch aus mehreren Komponenten bestehen können. Insbesondere können auf diese Weise Flüssigkeiten, z.B. Getränke, untersucht werden, die aus mehreren Komponenten zusammengesetzt sind. Es bereitet zumeist Schwierigkeiten, in Fluiden enthaltenes $CO_2$ zu messen, da $CO_2$ ein inaktives Gas ist. Eine Möglichkeit, $CO_2$ zu messen, ist das sogenannte ATR-Verfahren (Abgeschwächte Totale Reflexion).

Die Technik, $CO_2$ über eine abgeschwächte totale Reflexion zu messen, die auch unter der Bezeichnung mehrfache innere Reflexion bekannt ist, wird seit vielen Jahren zur $CO_2$-Analyse verwendet. In der ATR-Spektroskopie wird der Effekt ausgenutzt, dass ein Lichtstrahl an der Grenzfläche zwischen einem optisch dichterem Medium mit dem Brechungsindex n1 und einem optisch dünneren Medium mit dem Brechungsindex n2 (n1> n2) total reflektiert wird, wenn der Einfallswinkel des Lichtstrahls an die Grenzfläche den Grenzwinkel der Totalreflexion überschreitet. Für den Grenzwinkel gilt $\sin\theta$ = n2/n1.

An der Grenzfläche tritt der Lichtstrahl ins optisch dünnere Medium aus und wechselwirkt mit diesem. Hinter der reflektierenden Fläche bildet sich die sogenannte evaneszente Welle aus, mit einer Eindringtiefe im Bereich der Wellenlänge. Die Eindringtiefe $d_p$ hängt dabei von den beiden Brechzahlen $n_1$ und $n_2$, der verwendeten Wellenlänge $\lambda$ und dem Einfallswinkel $\Theta$ ab.

$$d_\mathrm{p} = \frac{\lambda}{2\pi\sqrt{n_1^2 \sin^2(\Theta) - n_2^2}}$$

Absorbiert das optisch dünnere Medium die eindringende Strahlung, wird der totalreflektierte Strahl geschwächt. Die Schwächung bzw. teilweise Extinktion ist abhängig von der Wellenlänge und das Spektrum der totalreflektierten Strahlung kann analog zur Transmissionmessung für die spektroskopische Auswertung herangezogen werden. Aus dem Transmissions- bzw. Extinktionsspektrum kann auf die Zusammensetzung des optisch dünneren Medium geschlossen werden.

Ferner ist die Bestimmung von Inhaltsstoffen geringer und geringster Konzentration aus der Absorption von Infrarotstrahlung eine bekannte Methode zum Nachweis von $CO_2$. Dabei wird ausgenutzt, dass Moleküle durch Infrarotstrahlungen ausgewählter Wellenlänge in Schwingung versetzt werden. Gelöstes $CO_2$ besitzt beispielsweise im Bereich um 4,3 $\mu$m ein charakteristisches Absorptionsband. Über das Lambert-Beersche Gesetz kann die Absorption in präzise Konzentrationsmessungen umgesetzt werden. Es beschreibt

$$E_\lambda = -\lg(I/I_0) = \varepsilon_\lambda . c.d \text{ mit}$$

$E_\lambda$ Absorption bei der Wellenlänge $\lambda$
I Intensität des transmittierten Lichtes
$I_0$ Intensität des einfallenden Lichtes
$\varepsilon_\lambda$ Extinktionskoeffizient
c Konzentration
d Schichtdicke des durchstrahlten Körpers.

Die beiden Grundprinzipien werden bei der Messung des $CO_2$-Gehaltes in Fluiden vorteilhafterweise gemeinsam eingesetzt.

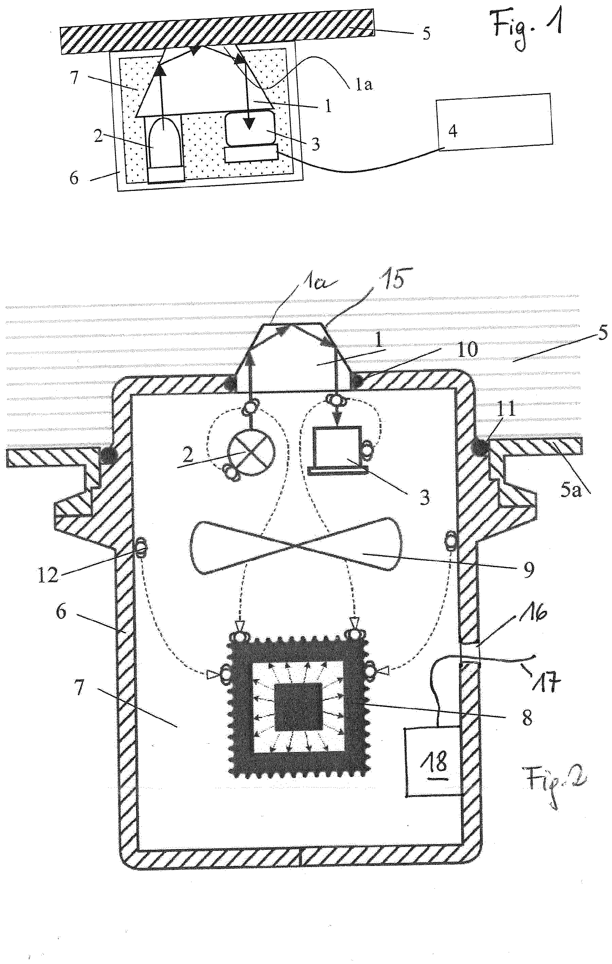

In Fig. 1 ist ein bekannter ATR-Sensor dargestellt. Kernstück des ATR-Sensors ist ein Reflexionskörper, der im interessierenden Bereich für die eingesetzte Strahlung, insbesondere IR-Strahlung im Bereich von 4,3 $\mu$m, transparent ist und einen hohen Brechungsindex aufweist. Bekannte, insbesondere kristalline, Materialien für solche optischen Reflexionskörper sind beispielsweise Saphir, ZnSe, Ge, SI, Thalliumbromid, YAG, Spinell usw. Häufig wird der Reflexionskörper so ausgeführt, dass über Mehrfachreflexionen in seinem Inneren die Intensitätsausbeute erhöht wird. Weitere Sensorkomponenten sind eine oder mehrere Strahlungsquellen passender Frequenz(bereiche), gegebenenfalls Mittel zur Frequenzauswahl und ein oder mehrere Detektoren für die reflektierte Strahlung; auch diese können frequenzselektiv ausgeführt sein. Eine Auswerteeinheit speichert die am Detektor gemessenen Intensitäten und unterstützt die Auswertung der Daten bzw. rechnet die gemessenen Intensitäten in die zugehörigen $CO_2$-Konzentrationen um. Zumindest die Sensorkomponenten sind im Innenraum eines Gehäuses eingebaut. In diesem Gehäuse sind auch die erforderlichen weiteren Bauteile, z.B. Leitungen, Dichtungen, Frequenzauswahlmittel usw., angeordnet. Die Messfläche des Reflexionskörpers wird mit dem zu vermessenden Fluid in Kontakt gebracht.

In der einfachsten Form umfasst ein ATR-Sensor einen von einem Kristall gebildeten Reflexionskörper als optisch aktives Element, das die internen Reflexionen ermöglicht, eine Strahlungsquelle und einen Detektor. Der Reflexionskörper ragt mit seiner Messfläche in das zu untersuchende Fluid, entweder direkt in den Prozessstrom oder in die in einem Behälter befindliche Fluid hinein. Derartige ATR-Sensoren haben somit zumindest drei passend zueinander angeordnete Sensorkomponenten. Das optisch aktive Element bzw. der Reflexionskörper ist gasdicht gegen das Gehäuse gepresst oder mit diesem druck- und gasdicht verbunden, z.B. mittels O-Ring oder unelastische Dichtungen, z.B. aus PEEK, TEFLON usw.

Es zeigte sich, dass derartige ATR-Sensoren fehlerbehaftet sind, insbesondere dass eine Langzeitdrift besteht, mit der die gemessenen Istwerte von den tatsächlichen Messwerten immer stärker abweichen. Aus diesem Grund war es erforderlich, derartige Messvorrichtungen in regelmäßigen, relativ kurzen Abständen zu kalibrieren bzw. nachzujustieren.

Ziel der Erfindung ist es, ein Messverfahren bzw. einen ATR-Sensor zu erstellen, mit denen diese Nachteile vermieden werden. Erfindungsgemäße ATR-Sensoren sollen auch weitgehend temperaturbeständig sein, um Hochtemperatur-Reinigungsverfahren im Betrieb zu überstehen, die derartige Sensoren in der Praxis über sich ergehen lassen müssen, insbesondere wenn sie zur Vermessung von Lebensmittelprodukten Verwendung finden.

Diese Ziele werden bei einem Verfahren der eingangs genannten Art dadurch erreicht, dass vor dem gasdichten Verschließen des Gehäuses, insbesondere zur Vermeidung einer Messwertdrift und zum Freihalten der Strahlungswege von $CO_2$ in das Gehäuse und/oder in einen mit dem Innenraum des Gehäuses verbindbaren oder verbundenen Aufnahmeraum eines Zusatzgehäuses vor dem gasdichten Verschließen des Gehäuses und/oder des Aufnahmeraumes des Zusatzgehäuses $CO_2$-Gettermaterials eingebracht wird. Ein ATR-Sensor der eingangs genannten Art ist dadurch gekennzeichnet, dass in dem Innenraum des gasdicht abgeschlossenen Gehäuses und/oder in einem mit dem Innenraum gasdicht verbundenen oder verbindbaren Aufnahmeraum eines Zusatzgehäuses $CO_2$-Gettermaterial enthalten ist.

Genaue und langwierige Untersuchungen, um der Ursache der bisher nicht erklärbaren von Sensor zu Sensor unterschiedlichen Langzeitdrift auf den Grund zu kommen, ergaben, dass diese Langzeitdrift hauptsächlich durch Ausgasen von $CO_2$ aus den verwendeten elektrischen Sensorkomponenten und den weiteren zur Messung erforderlichen Bauteilen stammen, die in dem Innenraum des Gehäuses eingeschlossen sind. Das aus diesen Sensorkomponenten und Bauteilen ausgasende $CO_2$ beeinflusst direkt die Messung, da es in den Strahlungsweg gelangt und die von der Strahlungsquelle zum Detektor geführte elektromagnetische Strahlung beeinflusst. Da die im Gehäuse befindlichen Bauteile und Sensorkomponenten unvermeidbar und kontinuierlich geringe bzw. geringste Mengen von $CO_2$ abgeben, war es bislang in der Praxis der Fall, dass die Messwerte unterschiedlich und je länger der Sensor im Gebrauch war, umso mehr von den anfänglich einjustierten bzw. kalibrierten Sollwerten abwichen.

Mit dem in das Gehäuse eingegebenen bzw. eingeschlossenen Gettermaterial ist es nunmehr möglich, das sukzessive ausgasende $CO_2$ abzubinden und damit die Kalibrierung des ATR-Sensors auf seinen exakten Anfangswert beizubehalten.

Es ist vorteilhaft, wenn das $CO_2$-Gettermaterial in zumindest einer Menge eingebracht wird, die aus den im Gehäuse und/oder im Zusatzgehäuse enthaltenen Sensorkomponenten und Bauteilen ausgasendes $CO_2$ über eine Zeitspanne, die zumindest der erwarteten Lebensdauer des ATR-Sensors oder zumindest der Zeitspanne bis zum Öffnen des Gehäuses und/oder Zusatzgehäuses für erforderliche Wartungs- und/oder Justierungszwecke entspricht, aufnehmen kann. Damit wird ein weitgehend kalibrierungsfreier und wartungsfreier ATR-Sensor erstellt. Zu vorgegebenen Wartungszeiten, die insbesondere durch den Austausch der erforderlichen Dichtungen, die unter Prozessbedingungen altern, und allenfalls auch durch Wartung der elektrischen und optischen Bauteile bestimmt werden, kann auch das Gettermaterial ausgetauscht werden. Erfindungsgemäß wird ein praktisch driftfreier $CO_2$-Sensor erstellt, der über seine gesamte Lebensdauer geringsten Wartungsaufwand bedingt.

Von Vorteil ist es, wenn das $CO_2$-Gettermaterial bei Erhitzung, vorzugsweise auf eine Temperatur auf 200 bis 1000°C, vorzugsweise auf 300 bis 600°C, $CO_2$ in sein Inneres aufnimmt und bindet und damit seine Oberfläche zur Aufnahme von weiterem $CO_2$-Molekülen zur Verfügung stellt. Ein derartiges poröses Gettermaterial besitzt die Fähigkeit, bei einer Erwärmung die an seiner Oberfläche gebundenen $CO_2$-Moleküle in seinem Inneren aufzunehmen und kann so bei zeitweise erfolgender Reaktivierung über die gesamte Lebensdauer des ATR-Sensors $CO_2$ absorbieren und stellt immer wieder freie Oberflächenbereiche für die Aufnahme bzw. Anlagerung von neu aus den im Innenraum befindlichen Sensorkomponenten und Bauteilen ausgasende $CO_2$-Moleküle zur Verfügung.

Es ist zweckmäßig, wenn das $CO_2$-Gettermaterial bis zu 200°C, vorzugsweise 150°C, bezüglich seiner $CO_2$-Affinität temperaturbeständig ist. Für den Fall einer notwendigen Gerätereinigung während des Einsatzes, die unter den angegebenen Temperaturen stattfindet, oder bei Hochtemperaturmessungen bleibt das Gettermaterial aktiv.

Der Sensor kann eine direkt integrierte Steuer- und Auswerteeinheit aufweisen oder einen Transducer aufweisen, mit einer abgesetzten Einheit für die Anzeige und Bedienung des Sensors, beispielsweise einem PC oder Anzeige- und Steuergeräten. Über Schnittstellen können auch mehrere Sensoren gleichzeitig überwacht und deren Daten ausgelesen und für eine Prozesssteuerung verwendet werden.

Von Vorteil kann es sein, wenn zusätzlich zu dem $CO_2$-Gettermaterial weitere Gettermaterialien im Innenraum des Gehäuses und/oder im Aufnahmeraum des Zusatzgehäuses untergebracht sind, die kohlenstoffhältige Gase und/oder Wasserdampf binden und/oder absorbieren. Damit kann allenfalls auftretender Einfluss von anderen Gasmolekülen ausgeschlossen werden.

Baulich von Vorteil kann es sein, wenn am Gehäuse und/oder Zusatzgehäuse ein Anschluss für eine Spülgasleitung ausgebildet ist oder eine Spülgasleitung angeschlossen ist.

Prinzipiell ist es auch möglich, dass das $CO_2$-Gettermaterial in den Aufnahmeraum eines Zusatzgehäuses eingebracht ist, der über eine gegebenenfalls mit einer Verschlusseinheit absperrbare Leitung mit dem Innenraum des Gehäuses verbunden ist und/oder im Innenraum des Gehäuses und/oder im Aufnahmeraumes eine Einrichtung zur Zwangsumwälzung, vorzugsweise ein Ventilator, der im Innenraum und/oder im Aufnahmeraum befindlichen Atmosphäre angeordnet ist. Es kann auch zweckmäßig sein, wenn im Gehäuse und/oder im Zusatzgehäuse eine gasdicht verschließbare Wandöffnung zum Austausch oder Nachfüllen von $CO_2$-Gettermaterial ausgebildet ist.

Um die Lebensdauer und Aufnahmefähigkeit des Gettermaterials zu erhöhen, kann vorgesehen sein, dass zur Aktivierung oder Reaktivierung des $CO_2$-Gettermaterials im Gehäuse und/oder im Zusatzgehäuse eine Heizeinrichtung für das $CO_2$-Gettermaterial vorgesehen ist.

Im Folgenden wird die Erfindung anhand der Zeichnungen beispielsweise näher erläutert.

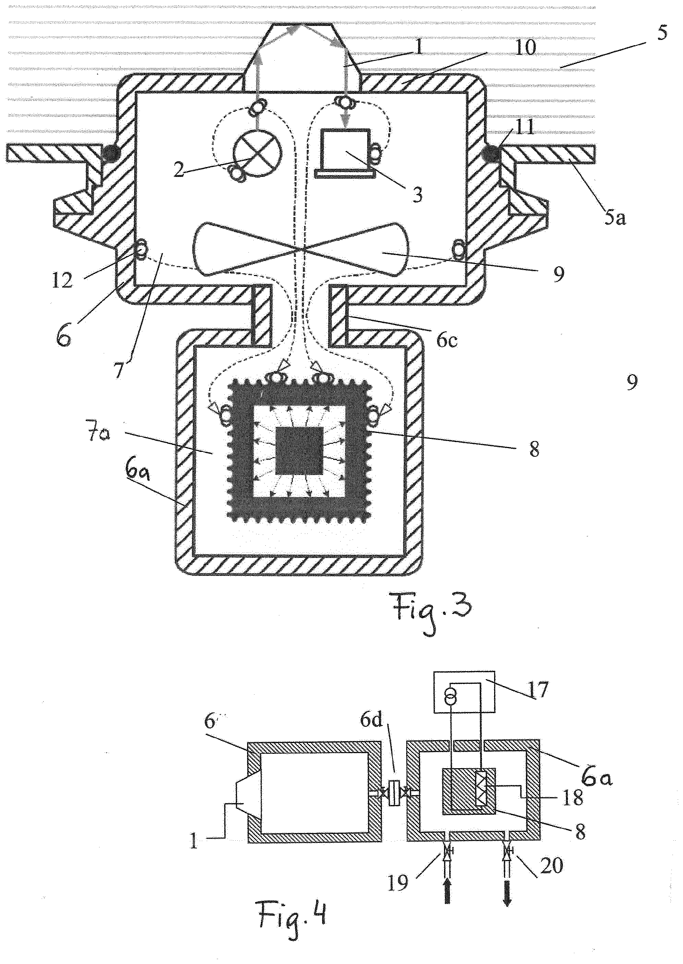

Fig. 2 zeigt einen vergleichbar mit dem in Fig. 1 dargestellten ATR-Sensor aufgebauten erfindungsgemäßen ATR-Sensor, bei dem sich im Innenraum des Gehäuses Gettermaterial befindet. Fig. 3 zeigt eine Ausführungsform eines erfindungsgemäßen ATR- Sensors, bei dem sich das Gettermaterial in einem mit dem Innenraum des Gehäuses verbundenen Aufnahmeraum eines Zusatzgehäuses befindet. Fig. 4 zeigt eine Ausführungsform eines ATR- Sensors, bei dem sich das Gettermaterial in einem eigenen, mit dem Innenraum des Gehäuses verbindbaren Aufnahmeraum eines Zusatzgehäuses befindet, der mit einer Heizeinrichtung bestückt ist.

Fig. 2 zeigt eine Ausführungsform eines ATR-Sensors, bei dem in dem Gehäuse 6 ein ATR-Element, d.h. ein von einem Kristall gebildeter Reflexionskörper 1, angeordnet ist. Das Gehäuse 6 ist mit einer Außenwand 10 mit Dichtungen 11 in eine Leitung 5a für ein Fluid 5 eingesetzt. Eine elektromagnetische Strahlungsquelle 2 strahlt in den Reflexionskörper 1 elektromagnetische Strahlung mit einem vorgegebenen Wellenlängenbereich ein, die nach mehrfacher Reflexion an den Grenzflächen 15 des Reflexionskörpers 1 zu dem zu untersuchenden Fluid 5 in einen Detektor 3 reflektiert wird. Das zu untersuchende Fluid 5 kann in einer Leitung 5a geführt werden oder ist in einem Behälter angeordnet. Es sind Vorkehrungen zu treffen, dass der Reflexionskörper 1 in entsprechenden Kontakt mit dem zu untersuchenden Fluid 5, insbesondere Flüssigkeiten, steht. Im Innenraum 7 des Gehäuses 6 befinden sich neben den zur Messung unbedingt erforderlichen Sensorkomponenten noch alle weiteren zur Durchführung der Messung erforderlichen Bauteile, welche mit 18 angedeutet sind. Im Innenraum 7 des Gehäuses 6 befindet sich Gettermaterial 8. Des Weiteren können im Innenraum 7 Mittel zum Bewegen der Innenatmosphäre, z.B. ein Ventilator 9, vorgesehen sein, die die aus den im Innenraum 7 befindlichen Sensorkomponenten und weiteren Bauteilen austretenden und auch die von ihnen selbst austretenden $CO_2$-Moleküle 12 dem Gettermaterial 8 zuführen. Sobald ein $CO_2$-Molekül auf die Oberfläche des Gettermaterials 8 trifft, wird es gebunden.

Das Gehäuse 6 des ATR- Sensors ist so ausgeführt, dass kleinste Leckraten gegenüber der Umgebung bzw. Außenräumen und dem zu untersuchenden Fluid 5 vorliegen. Dies wird durch ein gänzlich geschlossenes Gehäuse 6 und durch vakuumdichte Durchführungen bzw. Dichtungen 16 für allfällige Leitungen 17 erreicht. Des weiteren sind die elektrischen Anschlüsse sowie der Sitz des Reflexionskörpers 1 in Hinblick auf die Prozessumgebung druck- und temperaturbeständig ausgeführt. Das Gehäuse 6 kann insbesondere für spezielle Einsätze gegenüber Chemikalien beständig gestaltet sein.

Das Gettermaterial 8 wird vorteilhafterweise derart gewählt, dass seine Aktivierungsenergie möglichst klein ist. Das Gettermaterial 8 ist ein chemisch reaktives Material, das an seiner Oberfläche entweder durch Absorption oder durch chemische Bindung $CO_2$ binden kann. Von Vorteil ist es, wenn die an den freien Oberflächen niedergeschlagenen $CO_2$-Moleküle von der Oberfläche durch Erwärmen derart entfernt werden können, dass sie dabei in das Innere des Gettermaterials 8 eindringen, womit für das Anbinden von weiteren $CO_2$-Molekülen an der Oberfläche wieder Platz geschaffen wird, womit eine Reaktivierung des Gettermaterials 8 möglich ist.

Um derartige Gettermaterialien 8 vorteilhaft bei erfindungsgemäßen ATR-Sensoren einsetzen zu können, wird Gettermaterial 8 in den Innenraum 7 eingegeben, das über eine genügend große Oberfläche verfügt, um sämtliche während einer vorgegebenen Betriebsdauer ausgasende $CO_2$-Moleküle abbinden zu können. Alternativ dazu kann vorgesehen sein, dass Gettermaterial 8 eingesetzt wird, das durch Aufheizen regeneriert werden kann. Möglich ist auch, dass durch Zuführung eines Spülgases das Gettermaterial 8 ausgespült und die dabei austretenden $CO_2$-Moleküle abgeführt werden. Dieses Ausspülen wird vorteilhaft bei erhöhter Temperatur des Gettermaterials 8 vorgenommen.

Gut einsetzbare Gettermaterialien 8 sind beispielsweise Barium, Aluminium und/oder Magnesiumlegierungen; auch Titan und Platin eignen sich für diesen Einsatzzweck. Es können auch nicht verdampfbare Gettermaterialien 8 eingesetzt werden, wie sie beispielsweise aus der Vakuumtechnik bekannt sind. Diese bilden mit $CO_2$ stabile Verbindungen und auch bei höheren Temperaturen werden absorbierte $CO_2$-Moleküle vom Gettermaterial nicht abgegeben. Ein Beispiel für derartige Gettermaterialien 8 ist beispielsweise Zirkonium.

Wie in Fig. 3 dargestellt, ist es auch möglich, den Gehäuseinnenraum 7 mit dem Innen- bzw. Aufnahmeraum 7a eines Zusatzgehäuses 6a zu verbinden und in dem Aufnahmeraum 7a das Gettermaterial 8 oder weiteres Gettermaterial 8 zu platzieren. Über einen Ventilator 9 wird die Atmosphäre des Innenraumes 7 mit der Atmosphäre des Aufnahmeraumes 7a ausgetauscht und die ausgegasten $CO_2$-Moleküle aus dem Gehäuseinnenraum 7 zum Gettermaterial 8 befördert. Das Zusatzgehäuse 6a kann abnehmbar bzw. gasdicht verbindbar mit dem Gehäuse 6 gestaltet sein, beispielsweise über eine in der Verbindungsleitung 6c vorgesehene Absperrvorrichtung 6d, so wie diese in Fig. 4 dargestellt ist.

Sofern aufgenommene $CO_2$-Moleküle eine schützende Passivierungsschicht an der Getteroberfläche ausbilden, kann das Gettermaterial 8 nach einer vorgegebenen Zeitspanne durch Ausheizen wieder aktiviert werden. Je nach Material kann die Aktivierungstemperatur 200 bis 1000° betragen. Beim Aktivieren werden durch die Temperaturerhöhung die an der Getteroberfläche gebundenen $CO_2$-Moleküle bzw. - Molekülverbindungen mobilisiert und diffundieren in das Gettervolumen, sodass die Oberfläche wieder aufnahmefähig wird. Eine derartige Aktivierung des Gettermaterials 8 könnte beispielsweise auch bei der Reinigung der Außenfläche des Gehäuses 6 im Betrieb bei der vorgesehenen erhöhten Reinigungstemperatur erfolgen oder durch eine eigene Heizeinrichtung 18, die im Innenraum 7 des Gehäuses 6 oder im Aufnahmeraum 7a des Zusatzgehäuses 6a angeordnet ist. Die Heizeinrichtung 18 wird von einer Stromquelle bzw. Steuereinheit 17 versorgt bzw. gesteuert.

Wie in Fig. 4 dargestellt, kann Spülgas in das Gehäuse 6 und/oder das Zusatzgehäuse 6a über einen Spülgaseinlass 19 und ein Spülgasauslass 20 zugeführt werden.

**Patentansprüche**

1. Verfahren zur Messung des $CO_2$-Gehaltes von Fluiden mit einem ATR-Sensor, der in einem Gehäuse (6) als Sensorkomponenten eine elektromagnetische Strahlungsquelle (2) zur Abgabe eines vorgegebenen Wellenlängenbereiches, einen für die Strahlung durchlässigen und mit dem zu untersuchenden Fluid (5) in Kontakt bringbaren Reflexionskörper (1) und einen Detektor (3) für die reflektierte Strahlung und weitere zur Durchführung der Messung und zum Betrieb dienende Bauteile (16, 17, 18) aufweist,
**dadurch gekennzeichnet,**
**dass** vor dem gasdichten Verschließen des Gehäuses (6), insbesondere zur Vermeidung einer Messwertdrift und zum Freihalten der Strahlungswege von $CO_2$, in das Gehäuse (6) und/oder in einen mit dem Innenraum (7) des Gehäuses (6) verbindbaren oder verbundenen Aufnahmeraum (7a) eines Zusatzgehäuses (6a) vor dem gasdichten Verschließen des Innenraumes (7) und/oder des Aufnahmeraumes (7a) $CO_2$-Gettermaterial (8) eingebracht wird.

2. Verfahren nach Anspruch 1, **dadurch gekennzeichnet, dass** das $CO_2$-Gettermaterial (8) in zumindest einer Menge eingebracht wird, die aus den im Gehäuse (6) und/oder Zusatzgehäuse (6a) enthaltenen Sensorkomponenten und Bauteilen ausgasendes $CO_2$ über eine Zeitspanne, die zumindest der erwarteten Lebensdauer des ATR-Sensors oder zumindest der Zeitspanne bis zum Öffnen des Gehäuses (6) und/oder Zusatzgehäuses (6a) für erforderliche Wartungs- und/oder Justierungszwecke entspricht, aufnehmen kann.

3. ATR-Sensor, insbesondere zur Messung des $CO_2$-Gehaltes von Fluiden, der in einem Gehäuse (6) als Sensorkomponenten eine elektromagnetische Strahlungsquelle (2) zur Abgabe eines vorgegebenen Wellenlängenbereiches, einen für die Strahlung durchlässigen und mit dem zu untersuchenden Fluid (5) in Kontakt bringbaren Reflexionskörper (1) und einen Detektor (3) für die reflektierte Strahlung und weitere zur Durchführung der Messung und zum Betrieb erforderliche Bauteile aufweist, **dadurch gekennzeichnet, dass** in dem Innenraum (7) des gasdicht abgeschlossenen Gehäuses (6) und/oder in einem mit dem Innenraum (7) gasdicht verbundenen oder verbindbaren Aufnahmeraum (7a) eines Zusatzgehäuses (6a) $CO_2$-Gettermaterial (8) enthalten ist.

4. ATR-Sensor nach Anspruch 3, **dadurch gekennzeichnet, dass** das $CO_2$-Gettermaterial (8) bei Erhitzung, vorzugsweise auf eine Temperatur auf 200 bis 1000°C, vorzugsweise auf 300 bis 600°C, $CO_2$ in sein Inneres aufnimmt und bindet und damit seine Oberfläche zur Aufnahme von weiterem $CO_2$-Molekülen zur Verfügung steht.

5. ATR-Sensor nach Anspruch 3 oder 4, **dadurch gekennzeichnet, dass** das $CO_2$-Gettermaterial (8) bis zu 200°C, vorzugsweise 150°C, bezüglich seiner $CO_2$-Affinität temperaturbeständig ist.

6. ATR-Sensor nach einem der Ansprüche 3 bis 5, **dadurch gekennzeichnet, dass** im Innenraum (7) und/oder im Aufnahmeraum (7a) als zur Durchführung der Messung und zum Betrieb dienende Bauteile Steuer- und/oder Auswerteeinheiten (18), Transducer Dichtungen (16), Leitungen (17), Aufnahmebehälter für das $CO_2$-Gettermaterial (8) und/oder elektronische Bauteile angeordnet sind.

7. ATR-Sensor nach einem der Ansprüche 3 bis 6, **dadurch gekennzeichnet, dass** zusätzlich zu dem $CO_2$-Gettermaterial (8) weitere Gettermaterialien im Innenraum (7) des Gehäuses (6) und/oder im Aufnahmeraum (7a) des Zusatzgehäuses (6a) untergebracht sind, die kohlenstoffhältige Gase und/oder Wasserdampf binden und/oder absorbieren.

8. ATR-Sensor nach einem der Ansprüche 3 bis 7, **dadurch gekennzeichnet, dass** am Gehäuse (6) und/oder am Zusatzgehäuse (6a) ein Anschluss (19) für eine Spülgasleitung ausgebildet ist oder eine Spülgasleitung angeschlossen ist.

9. ATR-Sensor nach einem der Ansprüche 3 bis 8, **dadurch gekennzeichnet, dass** das $CO_2$-Gettermaterial (8) in den Aufnahmeraum (7a) eines Zusatzgehäuses (6a) eingebracht ist, der über eine gegebenenfalls mit einer Verschlusseinheit (6d) absperrbare Leitung (6c) mit dem Innenraum (7) des Gehäuses (6) verbunden ist.

10. ATR-Sensor nach einem der Ansprüche 3 bis 9, **dadurch gekennzeichnet, dass** im Innenraum (7) des Gehäuses (6) und/oder im Aufnahmeraumes (7a) eine Einrichtung (9) zur Zwangsumwälzung, vorzugsweise ein Ventilator, der im Innenraum (7) und/oder im Aufnahmeraum (7a) befindlichen Atmosphäre angeordnet ist.

11. ATR-Sensor nach einem der Ansprüche 3 bis 10, **dadurch gekennzeichnet, dass** im Gehäuse (6) und/oder im Zusatzgehäuse (6a) eine gasdicht verschließbare Wandöffnung zum Austausch oder Nachfüllen von $CO_2$-Gettermaterial (8) ausgebildet ist.

12. ATR-Sensor nach einem der Ansprüche 3 bis 11, **dadurch gekennzeichnet, dass** zur Aktivierung oder Reaktivierung des $CO_2$-Gettermaterials (8) im Gehäuse (6) und/oder im Zusatzgehäuse (6a) eine Heizeinrichtung (18) für das $CO_2$-Gettermaterial (8) vorgesehen ist.

Fig. 1

Fig. 2

Fig. 3

Fig. 4

Europäisches
Patentamt

European
Patent Office

Office européen
des brevets

**EUROPÄISCHER RECHERCHENBERICHT**

**Nummer der Anmeldung**

**EP 21 21 3430**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2004/024541 A1 (UCHIDA SHINJI [JP] ET AL) 5. Februar 2004 (2004-02-05) * Seite 3, Absatz 61 – Seite 4, Absatz 65; Abbildung 4 * ----- | 1-12 | INV. G01N21/55 G01N21/552 ADD. G01N21/27 |
| Y | DE 40 21 864 A1 (INSTRUMENTARIUM CORP [FI]) 17. Januar 1991 (1991-01-17) * das ganze Dokument * ----- | 1-12 | |
| Y | EP 1 085 314 A2 (LI COR INC [US]) 21. März 2001 (2001-03-21) * Spalte 2, Absatz 8 – Spalte 3, Absatz 9 * * Spalte 4, Absatz 13-14 * * Spalte 8, Absatz 33-34 * ----- | 1-12 | |
| A | US 2007/125950 A1 (WANG HAI-SHUI [CN] ET AL) 7. Juni 2007 (2007-06-07) * Seite 2, Absatz 35 – Seite 4, Absatz 47 * ----- | 1-12 | |
| A | US 4 312 669 A (BOFFITO CLAUDIO ET AL CLAUDIO BOFFITO [IT] ET AL) 26. Januar 1982 (1982-01-26) * Spalte 2, Zeile 40 – Spalte 3, Zeile 34 * ----- | 1-12 | RECHERCHIERTE SACHGEBIETE (IPC) G01N G01J |
| A | US 2008/202211 A1 (WETZIG DANIEL [DE]) 28. August 2008 (2008-08-28) * Seite 2, Absatz 24 – Absatz 25 * ----- | 1-12 | |

Der vorliegende Recherchenbericht wurde für alle Patentansprüche erstellt

| Recherchenort | Abschlußdatum der Recherche | Prüfer |
|---|---|---|
| München | 20. Juni 2022 | Huenges, Alexandra |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes
  Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 21 3430

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2022

| Im Recherchenbericht angeführtes Patentdokument | Datum der Veröffentlichung | Mitglied(er) der Patentfamilie | Datum der Veröffentlichung |
|---|---|---|---|
| US 2004024541 A1 | 05-02-2004 | CN 1479864 A | 03-03-2004 |
| | | EP 1422512 A1 | 26-05-2004 |
| | | JP WO2003021239 A1 | 16-12-2004 |
| | | US 2004024541 A1 | 05-02-2004 |
| | | WO 03021239 A1 | 13-03-2003 |
| DE 4021864 A1 | 17-01-1991 | DE 4021864 A1 | 17-01-1991 |
| | | FI 893329 A | 08-01-1991 |
| | | US 5091649 A | 25-02-1992 |
| EP 1085314 A2 | 21-03-2001 | DE 60031926 T2 | 26-04-2007 |
| | | EP 1085314 A2 | 21-03-2001 |
| | | US 6317212 B1 | 13-11-2001 |
| US 2007125950 A1 | 07-06-2007 | JP 2007108151 A | 26-04-2007 |
| | | US 2007125950 A1 | 07-06-2007 |
| US 4312669 A | 26-01-1982 | DE 3003114 A1 | 04-09-1980 |
| | | FR 2447745 A1 | 29-08-1980 |
| | | GB 2043691 A | 08-10-1980 |
| | | IT 1110271 B | 23-12-1985 |
| | | JP S621292 B2 | 12-01-1987 |
| | | JP S55124538 A | 25-09-1980 |
| | | NL 8000611 A | 07-08-1980 |
| | | US 4312669 A | 26-01-1982 |
| US 2008202211 A1 | 28-08-2008 | CN 1985159 A | 20-06-2007 |
| | | DE 102004034381 A1 | 16-02-2006 |
| | | EP 1769226 A1 | 04-04-2007 |
| | | JP 2008506936 A | 06-03-2008 |
| | | US 2008202211 A1 | 28-08-2008 |
| | | WO 2006008253 A1 | 26-01-2006 |

EPO FORM P0461

Für nähere Einzelheiten zu diesem Anhang : siehe Amtsblatt des Europäischen Patentamts, Nr.12/82